# EUROPÄISCHE PATENTANMELDUNG

(11) **EP 1 464 562 A2**
(43) Veröffentlichungstag der Anmeldung: **06.10.2004**
(21) Anmeldenummer: 04007928.7
(22) Anmeldetag: 01.04.2004
(51) Int. Cl.: B62D 5/04, B62D 5/06

(54) **Steer-by-wire-Lenksystem für ein Kraftfahrzeug**

(30) Priorität: 03.04.2003 DE 10315118
(71) Anmelder: ADAM OPEL AG, 65423 Rüsselsheim (DE)
(72) Erfinder: Bielaczek, Christian, 61118 Bad Vilbel (DE); Jenny, Thomas, 64342 Seeheim-Jugenheim (DE)

(57) **Zusammenfassung**

Die Erfindung betrifft ein Steer-by-Wire-Lenksystem für ein Kraftfahrzeug.

Das Steer-by-Wire-Lenksystem weist eine von einem Fahrer des Kraftfahrzeugs betätigbaren Lenkeinrichtung (2) auf, wobei die Lenkeinrichtung (2) mit einer Lenksäule (3) drehfest verbunden ist. Ferner ist ein Sensor (6) vorhanden, wobei der Sensor (6) der Lenksäule (3) zugeordnet ist und Signale eines vom Fahrer auf die Lenkeinrichtung (2) angelegten Fahrer-Lenkmoments und/oder Fahrer-Lenkwinkels ermittelt. Die vom Sensor (6) ermittelten Signale werden einer Steuerungseinrichtung (7) zugeführt. Ein Stellmotor (8) ist von der Steuerungseinrichtung (7) steuerbar. Der Stellmotor (8) legt ein Lenkmoment und/oder einen Lenkwinkel an ein Lenkgetriebe (4).

Erfindungsgemäß ist eine Lenkmoment-Unterstützungseinrichtung (11) vorhanden, die zusätzlich zu dem von dem Stellmotor (8) an das Lenkgetriebe (4) angelegten Lenkmoment ein Unterstützungslenkmoment an das Lenkgetriebe (4) anlegt.

## Beschreibung

Die Erfindung betrifft ein Steer-by-Wire-Lenksystem für ein Kraftfahrzeug mit einer von einem Fahrer des Kraftfahrzeugs betätigbaren Lenkeinrichtung, wobei die Lenkeinrichtung mit einer Lenksäule drehfest verbunden ist, mit einem Sensor, wobei der Sensor der Lenksäule zugeordnet ist und Signale eines vom Fahrer auf die Lenkeinrichtung angelegten Fahrer-Lenkmoments und/oder Fahrer-Lenkwinkels ermittelt, mit einer Steuerungseinrichtung, wobei der Steuerungseinrichtung die vom Sensor ermittelten Signale zugeführt werden, und mit einem Stellmotor, wobei der Stellmotor von der Steuerungseinrichtung steuerbar ist und ein Lenkmoment und/oder einen Lenkwinkel an ein Lenkgetriebe anlegt.

Bei derartigen Steer-by-Wire-Lenksystemen wird ein vom Fahrer an die Lenkeinrichtung angelegter Lenkwunsch nicht direkt an das Lenkgetriebe und damit letztendlich an zu lenkende Räder angelegt, sondern vielmehr indirekt über einen Stellmotor. Bei den aus dem Stand der Technik bekannten Steer-by-Wire-Lenksystemen wird das an das Lenkgetriebe angelegte Lenkmoment ausschließlich von einem als Elektromotor ausgebildeten Stellmotor erzeugt. Zur Bereitstellung großer Spurstangenkräfte müssen daher nach dem Stand der Technik auch große Stellmotoren verwendet werden, was einerseits Probleme im dynamischen Verhalten des Lenksystems verursachen kann und andererseits aus Kostengründen nachteilig ist.

Ein derartiges Steer-by-Wire-Lenksystem ist aus der DE 100 60 374 A1 bekannt.

Hiervon ausgehend liegt der vorliegenden Erfindung das Problem zu Grunde, ein verbessertes Steer-by-Wire-Lenksystem für ein Kraftfahrzeug zu schaffen.

Dieses Problem wird dadurch gelöst, dass das Eingangs genannte Steer-by-Wire-Lenksystem durch die Merkmale des kennzeichnenden Teils des Anspruchs 1 weitergebildet ist. Erfindungsgemäß ist eine Lenkmoment-Unterstützungseinrichtung vorgesehen, die zusätzlich zu dem von dem Stellmotor an das Lenkgetriebe angelegten Lenkmoment ein Unterstützungslenkmoment an das Lenkgetriebe anlegt. Hierdurch ist es möglich, auch bei Verwendung eines kleinen Stellmotors die erforderlichen Spurstangenkräfte aufzubringen.

Vorzugsweise ist die Lenkmoment-Unterstützungseinrichtung als hydraulisches Power-Steering-System ausgebildet. Hierdurch ist es möglich, die Vorteile eines Steer-by-Wire-Lenksystems mit den Vorteilen eines hydraulischen Power-Steering-Lenksystems zu verbinden. Eine derartige Lösung verfügt über ein vorteilhaftes dynamisches Verhalten und ist zugleich preiswert realisierbar.

Nach einer vorteilhaften Weiterbildung der Erfindung ist die Lenkmoment-Unterstützungseinrichtung in Wirkungsrichtung zwischen dem Stellmotor und dem Lenkgetriebe angeordnet. Der Stellmotor legt einerseits über eine Ritzelwelle das Lenkmoment an das Lenkgetriebe an. Andererseits bestimmt der Stellmotor die Öffnungsstellung des Lenkventils und beeinflusst auf diese Art und Weise das Unterstützungslenkmoment. So ist ein adaptives Lenksystem mit einem besonders vorteilhaften dynamischen Verhalten realisierbar.

Bevorzugte Weiterbildungen der Erfindung ergeben sich aus den abhängigen Unteransprüchen und der nachfolgenden Beschreibung.

Nachfolgend wird ein Ausführungsbeispiel der Erfindung, ohne hierauf beschränkt zu sein, unter Bezugnahme auf die Zeichnung näher erläutert. In der Zeichnung zeigt:

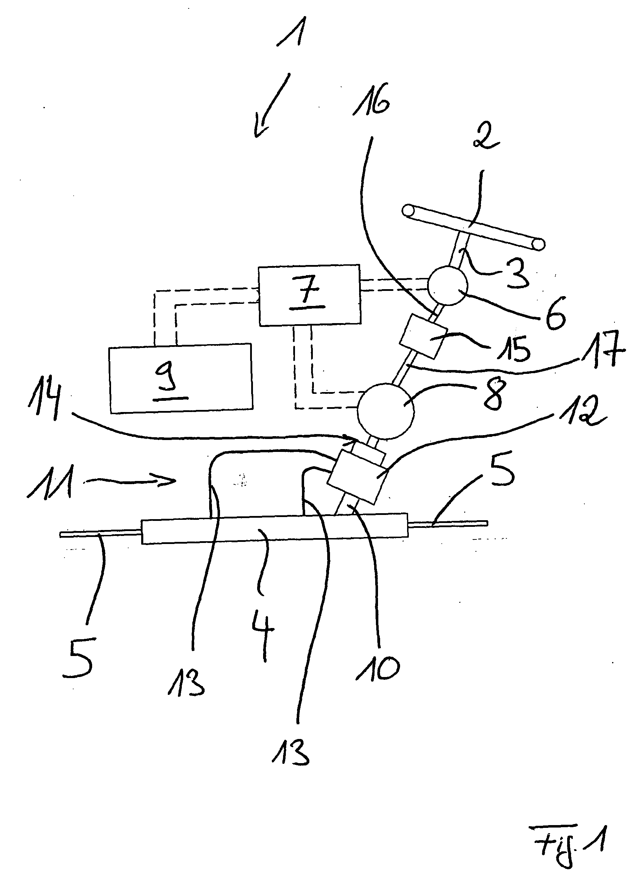

- Fig. 1:: ein erfindungsgemäßes Steer-by-Wire-Lenksystem für ein Kraftfahrzeug in schematisierter Darstellung.

Das erfindungsgemäße Steer-by-Wire-Lenksystem 1 umfasst eine Lenkeinrichtung 2, die von einem nicht-dargestellten Fahrer des Kraftfahrzeugs betätigt wird. Der Fahrer legt an die Lenkeinrichtung 2 einen Lenkwunsch, nämlich einen Fahrer-Lenkwinkel und ein Fahrer-Lenkmoment, an. Im Sinne dieses Lenkwunsches des Fahrer sollen letztendlich nicht-dargestellte Räder eines im Detail nicht-dargestellten Kraftfahrzeugs beeinflusst werden. In der stark schematisierten Darstellung der Fig. 1 ist lediglich ein Lenkgetriebe 4 sowie eine von dem Lenkgetriebe 4 betätigbare Spurstange 5 dargestellt. An der Spurstange 5 greifen die nicht-dargestellten, zu lenkenden Räder des Kraftfahrzeugs an.

Bei dem Steer-by-Wire-Lenksystem 1 gemäß Fig. 1 wird das vom Fahrer auf die Lenkeinrichtung 2 eingebrachte Fahrer-Lenkmoment sowie der Fahrer-Lenkwinkel nicht direkt auf das Lenkgetriebe 4 übertragen, sondern indirekt. Hierzu ist bei dem Steer-by-Wire-Lenksystem 1 ein Sensor 6 vorgesehen, der der Lenksäule 3 zugeordnet ist. Der Sensor 6 ermittelt Signale, die dem vom Fahrer auf die Lenkeinrichtung 2 eingebrachten Fahrer-Lenkmoment sowie Fahrer-Lenkwinkel entsprechen. Diese vom Sensor 6 ermittelten Signale werden einer Steuerungseinrichtung 7 zugeführt. Die Steuerungseinrichtung 7 ermittelt aus den vom Sensor 6 bereitgestellten Signalen sowie aus anderen Größen, wie zum Beispiel der Geschwindigkeit des Kraftfahrzeugs, eine Ausgangsgröße, die einem Stellmotor 8 zugeführt wird. Der Stellmotor 8 legt dann letztendlich einen Lenkwinkel und ein Lenkmoment an das Lenkgetriebe 4 an. Fig. 1 zeigt stark schematisiert ein Meßsystem 9, welches die anderen Größen, wie zum Beispiel die Geschwindigkeit des Kraftfahrzeugs, ermittelt und der Steuerungseinrichtung 7 bereitstellt.

Wie bereits erwähnt, ermittelt die Steuerungseinrichtung 7 aus den vom Sensor 6 ermittelten Signalen und aus den vom Meßsystem 9 bereitgestellten anderen Größen eine Stellgröße für den Stellmotor 8, der als Elektromotor ausgebildet ist. Der Stellmotor 8 wirkt über eine Ritzelwelle 10 auf das Lenkgetriebe 4 ein, welches die rotatorische Bewegung der Ritzelwelle 10 in eine translatorische Bewegung der Spurstange 5 umwandelt. Das vom Fahrer aufgebrachte Fahrer-Lenkmoment sowie der Fahrer-Lenkwinkel werden demnach nicht unmittelbar auf das Lenkgetriebe 4 übertragen, sondern indirekt über den Stellmotor 8. Im Normalbetrieb des Steer-by-Wire-Lenksystems besteht keine mechanische Kopplung zwischen der Lenksäule 3 und dem Lenkgetriebe 4.

Erfindungsgemäß ist eine Lenkmoment-Unterstützungseinrichtung 11 vorhanden. Die Lenkmoment-Unterstützungseinrichtung 11 legt zusätzlich zu dem vom Stellmotor 8 an das Lenkgetriebe 4 angelegten Lenkmoment ein Unterstützungslenkmoment an das Lenkgetriebe 4 an. Die Lenkmoment-Unterstützungseinrichtung 11 ist im Ausführungsbeispiel der Fig. 1 als hydraulisches Power-Steering-System ausgebildet. Das Unterstützungslenkmoment wird demnach auf hydraulischem Weg erzeugt. Hierdurch ist es möglich, auch unter Verwendung eines kleinen Stellmotors 8 große Spurstangenkräfte zu realisieren.

Erfindungsgemäß ist die Lenkmoment-Unterstützungseinrichtung 11 in Wirkungsrichtung zwischen dem Stellmotor 8 und dem Lenkgetriebe 4 angeordnet. Hierzu wirkt der Stellmotor 8 auf ein hydraulisches Lenkventil 12 der Lenkmoment-Unterstützungseinrichtung 11 ein. Der Stellmotor 8 beeinflusst bzw. bestimmt die Öffnungsstellung des Lenkventils 12 und so das von der Lenkmoment-Unterstützungseinrichtung 11 bereitgestellte Unterstützungslenkmoment.

Wie in Fig. 1 dargestellt ist, umfasst die Lenkmoment-Unterstützungseinrichtung 11 neben dem Lenkventil 12 auch Hydraulikleitungen 13, die mit einem nicht-dargestellten Kolben, nämlich einem Hydraulikkolben, der Lenkmoment-Unterstützungseinrichtung 11 verbunden sind. Der Ölstrom durch die Hydraulikleitungen 13 und damit die Größe des vom Kolben der Lenkmoment-Unterstützungseinrichtung 11 auf das Lenkgetriebe 4 eingebrachten Unterstützungslenkmoments und damit der auf die Spurstange 5 wirkenden Zusatzkraft ist von der Öffnungsstelle des Lenkventils 12 abhängig.

Im Sinne der Erfindung legt der Stellmotor 8 demnach einerseits über die Ritzelwelle 10 das von der Steuerungseinrichtung 7 bestimmte Lenkmoment an das Lenkgetriebe 4 an. Andererseits beeinflusst der Stellmotor 8 die Öffnungsstellung des hydraulischen Lenkventils 12 und damit die Größe des von der Lenkmoment-Unterstützungseinrichtung 11 an das Lenkgetriebe 4 angelegten Unterstützungslenkmoments. Eine derartige Ausgestaltung des erfindungsgemäßen Steer-by-Wire-Lenksystems verfügt einerseits über ein äußerst positives, dynamisches Verhalten und ist andererseits kostengünstig realisierbar. Des weiteren wird ein adaptives Lenksystem bereitgestellt. Die Spurstangenkräfte können auch bei Verwendung eines kleinen Stellmotors 8 sicher aufgebracht werden. Im Sinne der Erfindung werden demnach die Vorteile eines Steer-by-Wire-Lenkkonzepts mit den Vorteilen eines Power-Steering-Lenkkonzepts verknüpft.

Im gezeigten Ausführungsbeispiel ist das Lenkventil 12 als Drehschieberventil ausgebildet. Der Stellmotor 8 wirkt auf einen Drehschieber bzw. Torsionsstab 14 des Lenkventils 12 ein, um dessen Öffnungsstellung zu beeinflussen.

Wie bereits mehrfach erwähnt, ist im Normalbetrieb des erfindungsgemäßen Steer-by-Wire-Lenksystems 1 die Lenkeinrichtung 2 bzw. die Lenksäule 3 vom Lenkgetriebe 4 mechanisch entkoppelt. Hierzu ist beim Ausführungsbeispiel gemäß Fig. 1 eine als Rückfallebene wirkende Kupplung 15 vorhanden. Die Kupplung ist im Normalbetrieb geöffnet, so dass keine Kopplung zwischen der Lenksäule 3 und dem Lenkgetriebe 4 besteht. Bei einem Stromausfall oder Ausfall des Stellmotors 8 wird jedoch die Kupplung 15 geschlossen, damit in diesem Fall noch eine Lenkbewegung des Kraftfahrzeugs möglicht ist. Hierzu ist die Kupplung 15 über Wellen 16, 17 einerseits mit der Lenksäule 3 und andererseits mit der Ritzelwelle 10 verbunden.

An dieser Stelle soll darauf hingewiesen werden, dass dann, wenn zusätzlich zum Stellmotor 8 ein weiterer redundanter Stellmotor und zusätzlich zu einer nicht-dargestellten Batterie des Kraftfahrzeugs eine weitere redundante Batterie verwendet wird, auf die Kupplung 15 und die Wellen 16, 17 komplett verzichtet werden kann. Sollte nämlich in diesem Fall ein Stellmotor 8 oder die Stromversorgung durch eine Batterie ausfallen, so übernimmt der redundante Stellmotor bzw. die redundante Batterie die entsprechende Funktion und gewährleistet eine ordnungsgemäße Lenkfunktion.

Bei einem derartigen Steer-by-Wire-Lenksystem ist auch ein sogenannter, als Elektromotor ausgebildeter Feedback-Aktuator vorhanden. Mithilfe eines solchen, nicht-dargestellten Feedback-Aktuators wird dem Fahrer des Kraftfahrzeugs ein der Fahrsituation angepasster Lenkwiderstand simuliert. Hierdurch erhält der Fahrer an der Lenkeinrichtung 2 eine Rückmeldung über die Fahrsituation und kann so auf sich ändernde Fahrbedingungen reagieren.

### Bezugszeichenliste

- Steer-by-Wire-Lenksystem: 1
- Lenkeinrichtung: 2
- Lenksäule: 3
- Lenkgetriebe: 4
- Spurstange: 5
- Sensor: 6
- Steuerungseinrichtung: 7
- Stellmotor: 8
- Meßsystem: 9
- Ritzelwelle: 10
- Lenkmoment-Unterstützungseinrichtung: 11
- Lenkventil: 12
- Hydraulikleitung: 13
- Torsionsstab: 14
- Kupplung: 15
- Welle: 16
- Welle: 17

## Patentansprüche

1. Steer-by-Wire-Lenksystem für ein Kraftfahrzeug, mit einer von einem Fahrer des Kraftfahrzeugs betätigbaren Lenkeinrichtung (2), wobei die Lenkeinrichtung (2) mit einer Lenksäule (3) drehfest verbunden ist, mit einem Sensor (6), wobei der Sensor (6) der Lenksäule (3) zugeordnet ist und Signale eines vom Fahrer auf die Lenkeinrichtung (2) angelegten Fahrer-Lenkmoments und/oder Fahrer-Lenkwinkels ermittelt, mit einer Steuerungseinrichtung (7), wobei der Steuerungseinrichtung (7) die vom Sensor (6) ermittelten Signale zugeführt werden, und mit einem Stellmotor (8), wobei der Stellmotor (8) von der Steuerungseinrichtung (7) steuerbar ist und ein Lenkmoment und/oder einen Lenkwinkel an ein Lenkgetriebe (4) anlegt, **gekennzeichnet durch** eine Lenkmoment-Unterstützungseinrichtung (11), die zusätzlich zu dem von dem Stellmotor (8) an das Lenkgetriebe (4) angelegten Lenkmoment ein Unterstützungslenkmoment an das Lenkgetriebe (4) anlegt.

2. Steer-by-Wire-Lenksystem nach Anspruch 1, **dadurch gekennzeichnet, dass** die Lenkmoment-Unterstützungseinrichtung (11) als Power-Steering-System ausgebildet ist.

3. Steer-by-Wire-Lenksystem nach Anspruch 1 oder 2, **dadurch gekennzeichnet, dass** die Lenkmoment-Unterstützungseinrichtung (11) in Wirkungsrichtung zwischen dem Stellmotor (8) und dem Lenkgetriebe (4) angeordnet ist.

4. Steer-by-Wire-Lenksystem nach einem oder mehreren der Ansprüche 1 bis 3, **dadurch gekennzeichnet, dass** die Lenkmoment-Unterstützungseinrichtung (11) ein hydraulisches Lenkventil (12) umfasst, wobei eine Öffnungsstellung des Lenkventils (12) vom Stellmotor (8) beeinflussbar ist.

5. Steer-by-Wire-Lenksystem nach einem,oder mehreren der Ansprüche 1 bis 4, **dadurch gekennzeichnet, dass** der Stellmotor (8) einerseits über eine Ritzelwelle (10) das Lenkmoment an das Lenkgetriebe (4) anlegt und andererseits die Öffnungsstellung des Lenkventils (12) beeinflusst und so das Unterstützungslenkmoment bestimmt.

6. Steer-by-Wire-Lenksystem nach Anspruch 4 oder 5, **dadurch gekennzeichnet, dass** das Lenkventil (12) als Drehschieberventil ausbildet ist und der Stellmotor (8) die Verdrehung eines Torsionsstabes (14) des Drehschieberventils übernimmt.

7. Steer-by-Wire-Lenksystem nach einem oder mehreren der Ansprüche 4 bis 6, **dadurch gekennzeichnet, dass** das Lenkventil (12) über Hydraulikleitungen (13) mit einem Kolben verbunden ist, der abhängig von der Öffnungsstellung des Lenkventils (12) das Unterstützungslenkmoment an das Lenkgetriebe (4) anlegt.

8. Steer-by-Wire-Lenksystem nach einem oder mehreren der Ansprüche 1 bis 7, **dadurch gekennzeichnet, dass** der Lenksäule (3) zusätzlich zum Sensor (6) ein als Elektromotor ausgebildeter Feedback-Aktuator zugeordnet ist, um dem Fahrer an der Lenkeinrichtung (2) einen Lenkwiderstand anzulegen.

9. Steer-by-Wire-Lenksystem nach einem oder mehreren der Ansprüche 1 bis 8, **dadurch gekennzeichnet, dass** zwischen den Stellmotor (8) und den Feedback-Aktuator eine als Rückfallebene dienende Kupplung (15) angeordnet ist, um die um im Normalbetrieb aufgetrennte mechanische Verbindung zwischen Lenksäule (3) und Ritzelwelle (4) im Störfall wiederherzustellen.
